# EUROPÄISCHE PATENTSCHRIFT

(11) **EP 3 298 439 B1**
(45) Veröffentlichungstag und Bekanntmachung des Hinweises auf die Patenterteilung: **23.02.2022**
(21) Anmeldenummer: 16723326.1
(22) Anmeldetag: 11.05.2016
(51) Int. Cl.: G01V 5/00, G06T 5/50, G06T 7/00

(54) **KORREKTUR VON RÖNTGENBILDERN**
X-RAY IMAGE CORRECTION
CORRECTION D'IMAGES DE RAYONS X

(30) Priorität: 22.05.2015 DE 102015108128
(43) Veröffentlichungstag der Anmeldung: 28.03.2018
(73) Patentinhaber: Smiths Heimann GmbH, 65205 Wiesbaden (DE)
(72) Erfinder: NIKOL, Peter, 65232 Taunusstein (DE)
(74) Vertreter: Klunker IP Patentanwälte PartG mbB
(86) Internationale Anmeldenummer: PCT/EP2016/060530
(87) Internationale Veröffentlichungsnummer: WO 2016/188749

(56) Entgegenhaltungen:
- EP-A1- 0 336 634
- WO-A1-2011/130845
- WO-A2-2013/142072
- US-A1- 2005 195 939
- US-A1- 2005 276 468
- US-A1- 2007 223 656
- US-A1- 2009 136 089
- US-A1- 2009 232 348
- US-A1- 2010 183 209
- US-A1- 2011 038 454
- US-B2- 7 706 502

## Beschreibung

Die vorliegende Erfindung betrifft allgemein das Gebiet der visuellen zerstörungsfreien Inspektion von Objekten mittels bildgebender Verfahren beispielsweise an Übergängen zu Bereichen mit erhöhtem Sicherheitsbedarf. Im Besonderen betrifft die Erfindung Möglichkeiten zur Korrektur bestimmter Fehler in Durchleuchtungsbildern der Objekte, um ein zurzeit erforderliches erneutes Durchleuchten eines oder mehrerer Inspektionsobjekte vermeiden zu können.

### Hintergrund der Erfindung

DE 101 49 254 A1 zeigt eine Röntgenprüfanlage mit mehreren Strahlungsebenen zur zerstörungsfreien Inspektion von Objekten. Eine derartige Inspektion kann beispielsweise im Rahmen einer Sicherheitsüberprüfung von Gepäckstücken auf Flughäfen erfolgen. Ein Inspektionsobjekt wird bei der Inspektion durch die mehreren Röntgenstrahlungsebenen gefördert und so durchleuchtet. Die Intensitäten der vom Inspektionsobjekt und seinem Inhalt nicht absorbierten Röntgenstrahlen werden von entsprechenden Detektoranordnungen gemessen. Die gemessenen Intensitätswerte werden ausgewertet und u. a. zur Erstellung eines oder mehrerer Röntgenbilder des Inspektionsobjekts verwendet. Die Röntgenbilder werden einer Bedienperson zur visuellen Überprüfung des Inhalts des Inspektionsobjekts auf einem Bildschirm angezeigt. Die visuelle Inspektion von Inspektionsobjekten mittels eines bildgebenden Verfahrens ist grundsätzlich zeitaufwendig, daher ist man ständig bemüht, das Verfahren und seine einzelnen Verfahrensschritte zu verbessern und zu optimieren.

Bei der Erzeugung von Röntgenbildern von Inspektionsobjekten, beispielsweise an Kontrollstellen, an denen kontinuierlich eine Vielzahl von Inspektionsobjekten geprüft wird, können Bildfehler auftreten, die ein erneutes Durchleuchten eines oder mehrerer Inspektionsobjekte erfordern. Ein erstes Szenario besteht darin, dass ein Inspektionsobjekt nicht vollständig in dem der Bedienperson angezeigten Röntgenbild enthalten ist. D. h., das Inspektionsobjekt wurde abgeschnitten, infolgedessen kann die Bedienperson das Inspektionsobjekt nicht vollständig visuell prüfen. Ein zweites Szenario besteht darin, dass mehrere Inspektionsobjekte in einem einzigen Röntgenbild erfasst wurden bzw. enthalten sind. Das Ergebnis der visuellen Auswertung für ein Inspektionsobjekt wird üblicherweise dem jeweiligen Röntgenbild zugeordnet. Bei mehreren Inspektionsobjekten im Röntgenbild ist dies nicht eindeutig. Daher muss eine Bedienperson oder Auswerteperson in beiden Szenarien die Röntgenbilder zurückweisen. Die betroffenen Inspektionsobjekte müssen dann erneut durchleuchtet oder manuell nachkontrolliert werden. Dies verursacht Mehraufwand an der oder den betroffenen Kontrollstellen und kann zu zusätzlichen Verzögerungen bei der Abfertigung der Inspektionsobjekte an der bzw. den Kontrollstellen führen.

US 2011/0170661 A1 betrifft eine registerhaltige Überlagerung verschiedener Ausgangsröntgenbilder desselben Inspektionsobjekts, die jeweils mittels zugehörigen Detektoren mit unterschiedlichen Abbildungseigenschaften erfasst wurden, um ein Ergebnisröntgenbild mit verbessertem Signal-Rausch-Abstand zu erhalten als dem der Ausgangsröntgenbilder. US 2011/0188726 A1 betrifft die Zusammensetzung mehrerer Teilröntgenbilder eines Körperteils (z.B. Oberschenkelknochen), um ein Panorama-Röntgenbild des gesamten Körperteils zu erzeugen. Für die Kombination der Teilröntgenbilder werden bei deren Erzeugung Referenzmarkierungen mit aufgenommen, auf denen basierend sich inhaltlich überlappende Bereiche der Teilröntgenbilder registerhaltig zum Panorama-Röntgenbildbild zur Deckung gebracht und damit passend zusammengefügt werden können. Die Bildbearbeitungsverfahren der US 2011/0170661 A1 und der US 2011/0188726 A1 sind zur Lösung des Eingangs beschrieben Problems ungeeignet.

US 2005/0276468 A1 zeigt ein Verfahren und System zum Extrahieren von 3D-Durchleuchtungsbildern eines Inspektionsobjekts aus kontinuierlich rekonstruierten 2D-Bildschnitten. Dazu ist das Verfahren konfiguriert, die Ränder einzelner Inspektionsobjekte in den rekonstruierten Bildern zu erkennen, indem Anfangs- und Endbildschnitte der einzelnen Inspektionsobjekte durch Auswertung mehrerer Bildschnitte erkannt werden. Das Verfahren ist aber nicht geeignet, die eingangs diskutierten Bildfehler zu beheben.

### Offenbarung der Erfindung

Es ist eine Aufgabe der Erfindung ein verbessertes Inspektionsverfahren bzw. Inspektionssystem vorzuschlagen, bei dem insbesondere ein zurzeit erforderliches erneutes Durchleuchten oder eine manuelle Nachkontrolle eines oder mehrerer Inspektionsobjekte vermieden werden kann.

Die Aufgabe wird mit den Merkmalen der jeweiligen unabhängigen Ansprüche gelöst. Einzelne Ausführungsbeispiele und vorteilhafte Weiterbildungen sind in den sich jeweils anschließenden Unteransprüchen definiert. Dabei gelten Merkmale und Details, die in Zusammenhang mit der erfindungsgemäßen Vorrichtung beschrieben sind, selbstverständlich im Zusammenhang mit dem erfindungsgemäßen Verfahren entsprechend und jeweils umgekehrt, sodass hier bezüglich der Offenbarung der einzelnen Aspekte wechselseitig Bezug genommen wird.

Ein Kerngedanke der Erfindung besteht darin, ein fehlerhaftes Durchleuchtungsbild zu erkennen und unter Berücksichtigung der Art des Fehlers das fehlerhafte Durchleuchtungsbild - gegebenenfalls unter Verwendung weiterer Durchleuchtungsbilder - zu korrigieren. Damit kann je nach Organisationsablauf der Kontrolle von Inspektionsobjekten, z.B. einer Gepäckkontrolle, vermieden werden, dass ein Inspektionsobjekt erneut durchleuchtet werden muss und/oder manuell nachkontrolliert werden muss. Beide Maßnahmen sind zeitintensiv und können den Ablauf verzögern.

Ein erster Aspekt der Erfindung betrifft ein Verfahren zur Korrektur von Bildfehlern in einem Durchleuchtungsbild gemäß Anspruch 1. Im Schritt (c) kann basierend darauf, welche Bildkante des Durchleuchtungsbildes das Inspektionsobjekt schneidet, ein vorhergehendes Durchleuchtungsbild und/oder nachfolgendes Durchleuchtungsbild abgerufen werden. Da die Durchleuchtungsbilder an einer Inspektionsanlage von kontinuierlich durch die Inspektionsanlage transportierten Inspektionsobjekten angefertigt werden, kann daran, ob ein Inspektionsobjekt von der führenden und/oder der nachlaufenden Bildkante des Durchleuchtungsbilds durchschnitten wird bzw. ob das Inspektionsobjekt auf der führenden und/oder der nachlaufenden Bildkante des Durchleuchtungsbilds liegt, bestimmt werden, ob ein vorhergehendes oder ein nachfolgendes Durchleuchtungsbild zur Vervollständigung des Inspektionsobjekts benötigt wird. Grundsätzlich kann es auch passieren, dass ein Inspektionsobjekt an zwei Seiten abgeschnitten wurde, dann werden das vorhergehende und das nachfolgende Durchleuchtungsbild benötigt.

Gemäß einem zweiten Aspekt der Erfindung sind weitere vorteilhafte Ausbildungen aus den abhängigen Ansprüchen erkennbar.

Im Schritt (b) und/oder im Schritt (e) kann das Verfahren so eingerichtet sein, dass automatisch erkannt wird, ob ein Durchleuchtungsbild mehrere Inspektionsobjekte und/oder ob ein Durchleuchtungsbild ein unvollständig erfasstes Inspektionsobjekt enthält. Ergänzend oder alternativ kann auch eine Abfrage einer Eingabe von einer Bedienperson derart erfolgen, dass die Eingabe anzeigt, ob das Durchleuchtungsbild mehrere Inspektionsobjekte und/oder ob ein Durchleuchtungsbild ein unvollständig erfasstes Inspektionsobjekt enthält. Die alternative Variante ist besonders vorteilhaft, weil eine Bedienperson relativ schnell erkennt, ob einer der beschriebenen Bildfehler vorliegt. Nach erfolgter Feststellung durch die Bedienperson kann die erfindungsgemäße Korrektur der betroffenen Durchleuchtungsbilder erfolgen.

Ein dritter Aspekt der Erfindung betrifft eine Auswertevorrichtung zur visuellen Auswertung von Durchleuchtungsbildern gemäß Anspruch 8.

Die Ausgabeeinheit kann ein beliebiges Computerdisplay oder Bildschirm sein. Die Eingabeeinheit ist im Rahmen der Erfindung unter anderem eingerichtet, Eingaben der Bedienperson in Reaktion auf ein angezeigtes Durchleuchtungsbild zu empfangen. Die Computereinheit ist erfindungsgemäß zur Durchführung eines Verfahrens gemäß dem ersten und/oder zweiten Aspekt der Erfindung, beispielsweise durch eine entsprechende Programmierung mittels Softwaremitteln eingerichtet.

Die Computereinheit kann weiter eine Kommunikationsschnittstelle aufweisen. Die Kommunikationsschnittstelle kann für eine drahtlose, z. B. WLAN, Bluetooth, Zig-Bee etc., oder eine leitungsgebundene, z. B. mittels Netzwerkkabel, Ethernet over Powerline, etc., Kommunikationsverbindung eingerichtet sein. Mittels der Kommunikationsschnittstelle ist die Computereinheit mit einer oder mehreren Inspektionsanlage zur zerstörungsfreien Inspektion von Inspektionsobjekten für eine Datenkommunikation vernetzbar, um von der einen oder den mehreren Inspektionsanlagen Durchleuchtungsbilder zur visuellen Auswertung vermittels der Datenkommunikation zu empfangen.

Ein vierter Aspekt der Erfindung betrifft eine Inspektionsanlage, gemäß Anspruch 10.

Ein fünfter Aspekt der Erfindung betrifft ein Inspektionssystem gemäß Anspruch 11.

Ein sechster Aspekt der Erfindung betrifft ein Computerprogrammprodukt mit einem Computerprogramm, gemäß Anspruch 12.

Ein siebter Aspekt der Erfindung betrifft einen Datenträger gemäß Anspruch 13.

Ein achter Aspekt der Erfindung betrifft einen Datenstrom mit elektronisch lesbaren Steuersignalen, gemäß Anspruch 14.

Mit der erfindungsgemäßen Lösung können Warteschlangenlängen und entsprechend Wartezeiten an Kontrollstellen verringert werden. Eine Reduzierung der Wartezeit fördert grundsätzlich die Akzeptanz der Sicherheitsverfahren. Darüber hinaus verringert sich mit der Reduzierung der Warteschlangenlänge auch der Platz, der für eine Kontrollstelle benötigt wird. Ebenso hat die Verringerung der Warteschlangenlänge auch eine positive Auswirkung auf das Sicherheitspersonal an einer solchen Kontrollstelle, da sich dadurch die mentale Belastung gleichermaßen reduziert.

### Bevorzugte Ausführungsbeispiele

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren.
Figur 1 zeigt ein Inspektionssystem mit einer Auswertevorrichtung, die über eine Netzwerkverbindung mit einer Inspektionsanlage verbunden ist.
Figur 2 veranschaulicht schematisch eine Sequenz von Durchleuchtungsbildern von Inspektionsobjekten, die mit der Inspektionsanlage der Figur 1 erzeugt wurden.
Figur 3 veranschaulicht einen ersten Aspekt eines Verfahrens zur Korrektur von Bildfehlern in einem Durchleuchtungsbild.
Figur 4 veranschaulicht einen zweiten Aspekt eines Verfahrens zur Korrektur von Bildfehlern in einem Durchleuchtungsbild als eigenständiges Verfahren oder vorteilhafte Weiterbildung des Verfahrens der Figur 3.
Figur 5 veranschaulicht eine Weiterbildung des Korrekturverfahrens der Figur 4.
Figur 6 zeigt ein Inspektionssystem mit mehreren Inspektionsanlagen an einer Kontrollstelle und mehreren Auswertevorrichtungen an einer räumlich getrennt angeordneten Auswertestelle.

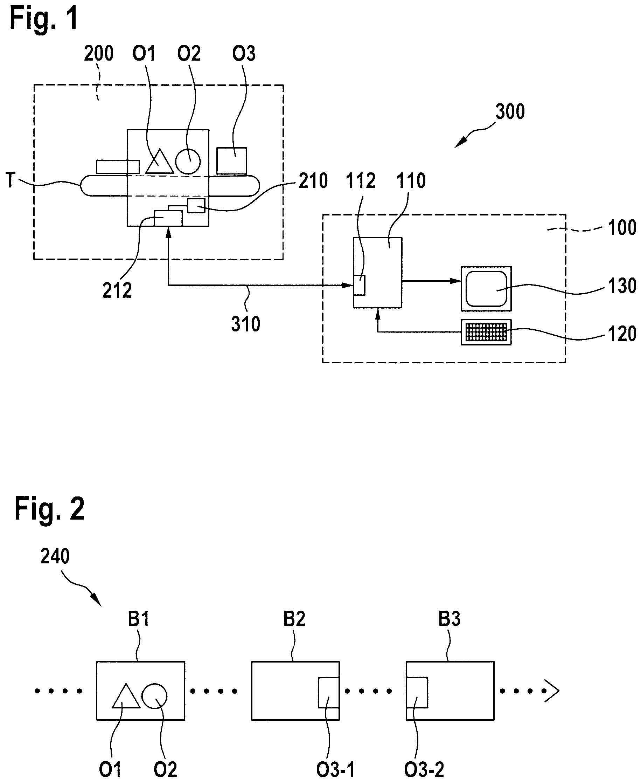

Figur 1 zeigt ein vereinfachtes Blockschaltbild eines Inspektionssystems 300 mit einer Auswertevorrichtung 100 zur visuellen Auswertung von Durchleuchtungsbildern B1, B2, B3 (Figur 2) von Inspektionsobjekten 01, 02, 03. Die Auswertevorrichtung 100 weist als Arbeitsplatz für eine Bedienperson im Wesentlichen eine Computereinheit 110, eine Eingabeeinheit 120 und eine Ausgabeeinheit 130 auf. Die Ausgabeeinheit 130 ist eingerichtet, der Bedienperson die Durchleuchtungsbilder B1, B2, B3 der Inspektionsobjekte 01, 02, 03 anzuzeigen, um den Inhalt der Inspektionsobjekte auf Zielgegenstände zu prüfen. Zielgegenstände können Gefahrengegenstände, wie Waffen, Sprengmittel, gefährliche Flüssigkeiten, und/oder Schmuggelware und/oder Drogen etc. sein. Die Eingabeeinheit 120 ist im Wesentlichen eingerichtet, Eingaben der Bedienperson zur Steuerung der Auswertevorrichtung 100 einzugeben. Weiter kann die Bedienperson in Reaktion auf ein angezeigtes Durchleuchtungsbild B1, B2, B3 das Ergebnis der visuellen Auswertung eingeben, wie beispielsweise, dass das Inspektionsobjekt 01, 02, 03 "sicher" ist oder, dass der Inhalt des Inspektionsobjekts O1, 02, 03 weiter überprüft werden muss.

Im Zusammenhang mit der hier vorgeschlagenen Verbesserung kann die Bedienperson an der Eingabeeinheit 120 auch der Auswertevorrichtung 100 anzeigen oder signalisieren, dass das angezeigte Durchleuchtungsbild B1, B2, B3 einen mglw. korrigierbaren Bildfehler aufweist, nämlich dass das Durchleuchtungsbild B1 mehrere Inspektionsobjekte O1 und O2 enthält oder, dass das Durchleuchtungsbild B2 oder B3 nur einen Teil 03-1 oder 03-2 eines Inspektionsobjekts 03 enthält. Für diese Fälle ist die Computereinheit 110 zur Durchführung eines der hier vorgeschlagenen Verfahren zur Korrektur von Bildfehlern in einem Durchleuchtungsbild B1, B2, B3 eingerichtet.

Die Durchleuchtungsbilder wurden mittels der Inspektionsanlage 200 erzeugt. Die Inspektionsanlage 200 kann im Wesentlichen eine Röntgenprüfanlage sein, wie sie z. B. aus der DE 101 49 254 A1 bekannt ist. Selbstverständlich kann es sich dabei auch um eine Röntgenprüfanlage mit nur einer Strahlungsebene handeln. Die Inspektionsanlage 200 ist im Wesentlichen für einen kontinuierlichen Transport mittels eines Transportmittels T, beispielsweise einem Transportband, von Inspektionsobjekten 01, 02, 03 durch die Inspektionsanlage 200 eingerichtet. Im Inneren der Inspektionsanlage 200 werden die Inspektionsobjekte O1, 02, 03 mittels eines bildgebenden Inspektionsverfahrens in bekannter Weise mit Röntgenstrahlen zerstörungsfrei durchleuchtet. Als Ergebnis erzeugt die Inspektionsanlage 200 Durchleuchtungsbilder der Inspektionsobjekte 01, 02, 03.

Die Auswertevorrichtung 100 ist im Ausführungsbeispiel mit dem Inspektionssystem 300 der Figur 1 räumlich getrennt mit der Inspektionsanlagen 200 über eine Netzwerkverbindung 310 für eine Datenkommunikation verbunden. Dazu weist die Computereinheit 110 eine Kommunikationsschnittstelle 112 auf, mittels der die Computereinheit 110 mit einer oder mehreren Inspektionsanlagen 200 zur zerstörungsfreien Inspektion der Inspektionsobjekte 01, 02, 03 über die Netzwerkverbindung 310 für die Datenkommunikation vernetzt ist. Über die Netzwerkverbindung 310 können erzeugte Durchleuchtungsbilder von an der Inspektionsanlage 200 inspizierten Inspektionsobjekten 01, 02, 03 zur visuellen Auswertung an die Auswertevorrichtung 100 übertragen werden. Selbstverständlich kann das Inspektionssystem 300 auch mehrere Inspektionsanlagen 200 aufweisen, die in gleicher Weise mit der Auswertevorrichtung 100 vernetzt sind. Gleichermaßen kann das Inspektionssystem 300 auch mehrere Auswertevorrichtungen 100 aufweisen, sodass die Arbeitslast bei der visuellen Auswertung von Durchleuchtungsbildern optimal auf die vorhandenen Auswertevorrichtungen 100 verteilt werden kann.

Alternativ kann die Auswertevorrichtung 100 auch unmittelbar in räumlicher Nähe zu der Inspektionsanlage 200 oder als Bestandteil davon ausgeführt sein.

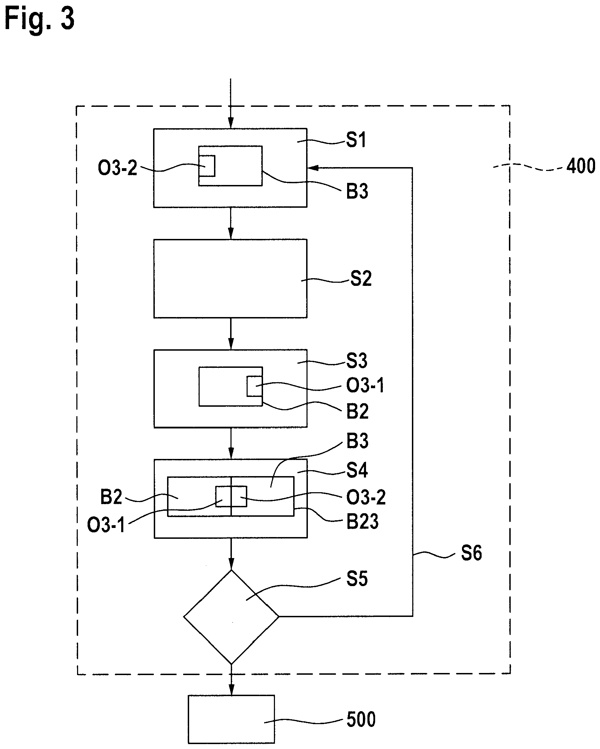

Figur 2 veranschaulicht als Beispiel eine Sequenz von Durchleuchtungsbildern B1, B2, B3, auf denen die Inspektionsobjekte O1, 02, 03 erfasst sind und die beispielsweise mit der Inspektionsanlage 200 der Figur 1 erzeugt wurden. Die hier gezeigten Durchleuchtungsbilder B1, B2, B3 dienen hier im Wesentlichen zur vereinfachten Darstellung von Bildfehlern, die sich mit dem im Zusammenhang mit den Figuren 3 bis 5 beschriebenen Korrekturverfahren korrigieren lassen. Im Durchleuchtungsbild B1 sind mehr als ein Inspektionsobjekt, nämlich zwei Inspektionsobjekte O1, 02 erfasst worden. In den Durchleuchtungsbildern B2, B3 ist jeweils nur ein Teil 03-1 oder 03-2 des Inspektionsobjekts 03 erfasst worden.

Figur 3 veranschaulicht einen ersten Aspekt eines Verfahrens 400 zur Korrektur von Bildfehlern in einem Durchleuchtungsbild B2 oder B3 gemäß dem ersten Szenario, bei dem das Inspektionsobjekt 03 nicht vollständig in dem der Bedienperson angezeigten Röntgenbild B2 oder B3 enthalten ist. Das Inspektionsobjekt 03 wurde bei der Erzeugung der Durchleuchtungsbilder B2 und B3 abgeschnitten. Ein Teil 03-1 des Inspektionsobjekts 03 befindet sich im Durchleuchtungsbild B2, der zweite Teil 03-2 befindet sich im Durchleuchtungsbild B3. Infolgedessen kann die Bedienperson weder im Durchleuchtungsbild B2 noch im Durchleuchtungsbild B3 das

Inspektionsobjekt 03 vollständig visuell prüfen und müsste an der Auswertevorrichtung 100 beide Durchleuchtungsbilder B2, B3 zurückweisen. Das betroffene Inspektionsobjekt 03 müsste dann erneut durchleuchtet werden oder manuell nachkontrolliert werden, was Mehraufwand an der Inspektionsanlage 200, die sich meist an einer Kontrollstelle befindet, verursacht. Dadurch wird dort der kontinuierliche Arbeitsfluss gestört. Dies führt zu zusätzlichen Verzögerungen bei der Abfertigung an der Kontrollstelle und im Ergebnis zu einer Vergrößerung einer dort befindlichen Warteschlange.

Zur Vermeidung dieser Nachteile wird das in der Figur 3 veranschaulichte Verfahren 400, das beispielsweise von der Computereinheit 110 der Auswertevorrichtung 100 der Figur 1 durchgeführt wird, vorgeschlagen.

Im Schritt S1 wird das Durchleuchtungsbild B3 an der Auswertevorrichtung 100 empfangen. Im sich anschließenden Schritt S2 wird zunächst erkannt, ob das Durchleuchtungsbild B3 nur einen Teil 03-2 eines Inspektionsobjekts 03 enthält (siehe auch Figuren 1 und 2).

Da das Durchleuchtungsbild B3 nur einen Teil 03-2 des Inspektionsobjekts 03 enthält, ruft die Auswertevorrichtung 100 ein weiteres Durchleuchtungsbild B2 von derselben Inspektionsanlage 200 ab, die auch das Durchleuchtungsbild B3 erzeugt hat. Das weitere Durchleuchtungsbild B2 bestimmt sich dadurch, dass es einen weiteren Teil 03-1 des Inspektionsobjekts 03 enthält.

Ob von derselben Inspektionsanlage 200 ein vorhergehendes oder eine nachfolgendes Durchleuchtungsbild mit Bezug auf das Durchleuchtungsbild B3 abzurufen ist, kann darauf basierend bestimmt werden, welche Bildkante des Durchleuchtungsbildes B3 das Inspektionsobjekt 03 schneidet. Im Beispiel schneidet die nachlaufende Kante des Durchleuchtungsbilds B3 das Inspektionsobjekt O3, daher ist das nachfolgende Durchleuchtungsbild B2 an der Inspektionsanlage 200 abzurufen.

Im nächsten Schritt S4 wird das Durchleuchtungsbild B3 mit dem weiteren Durchleuchtungsbild B2 an den zugehörigen Kanten zu einem kombinierten Durchleuchtungsbild B23 kombiniert. Nun kann sich ein Schritt S5 anschließen, in dem das Verfahren zu Schritt S1 zurückkehrt, da im Schritt S5 das Durchleuchtungsbild B3 mit einem weiteren Durchleuchtungsbild B2 kombiniert wurde. Damit kann sichergestellt werden, dass auch Bildfehler korrigiert werden können, bei denen Teile eines Inspektionsobjekts auf mehr als zwei Durchleuchtungsbilder verteilt sind.

Wenn das Verfahren 400 im Schritt S5 nicht zu Schritt S1 zurückkehrt, ist der Bildfehler gemäß dem ersten Szenario korrigiert worden.

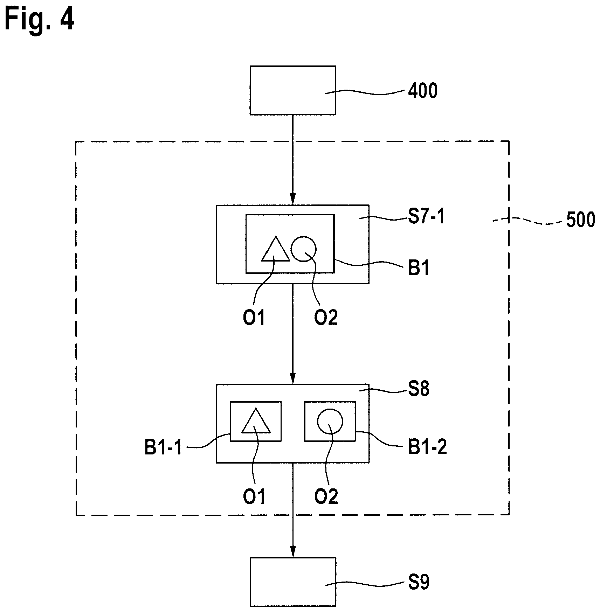

Das Verfahren 400 kann gemäß einer Weiterbildung mit einem weiteren Korrekturverfahren zur Korrektur von Bildfehlern gemäß dem zweiten Szenario fortgesetzt werden. Bei der im Zusammenhang mit der Figur 3 erläuterten Zusammenfügung von Durchleuchtungsbildern kann es passieren, dass im kombinierten Durchleuchtungsbild B23 möglicherweise mehrere Inspektionsobjekte enthalten sind. Dies ist mit dem Verfahren 500, welches im Folgenden anhand von Figur 4 erläutert wird, korrigierbar.

Figur 4 veranschaulicht einen zweiten Aspekt eines Verfahrens 500 zur Korrektur von Bildfehlern in einem Durchleuchtungsbild. Das Verfahren 500 kann als Weiterbildung des Verfahrens 400 der Figur 3 sich daran anschließen, kann aber auch eigenständig ohne das Verfahren 400 implementiert werden.

Figur 4 betrifft Bildfehler gemäß des zweiten Szenarios, bei dem mehrere Inspektionsobjekte O1, O2 in einem einzigen Durchleuchtungsbild B1 erfasst wurden, d. h. enthalten sind. Da das Ergebnis der visuellen Auswertung für ein Inspektionsobjekt üblicherweise dem jeweiligen Durchleuchtungsbild zugeordnet wird, ist dies bei mehreren Inspektionsobjekten O1, O2 im Durchleuchtungsbild B1 nicht eindeutig. Daher müsste eine Bedienperson auch im zweiten Szenario das Durchleuchtungsbild B1 zurückweisen. Die betroffenen Inspektionsobjekte 01, 02 müssen dann erneut durchleuchtet oder manuelle nachkontrolliert werden. Dies verursacht wieder die oben im Zusammenhang mit der Figur 3 diskutierten Nachteile an der betroffenen Kontrollstelle.

Im Verfahren 500 der Figur 4 wird zunächst im Schritt S7-1 erkannt, ob das Durchleuchtungsbild B1 oder ggf. das kombinierte Durchleuchtungsbild B23 mehrere Inspektionsobjekte, hier O1, 02, enthält. Im Anschluss daran wird im Schritt S8 das Durchleuchtungsbild B1 so in Ergebnisdurchleuchtungsbilder B1-1, B1-2 aufgeteilt, dass jedes Ergebnisdurchleuchtungsbild B1-1, B1-2 jeweils nur eines der mehreren Inspektionsobjekte O1, O2 enthält. Im Beispiel wird das Ergebnisbild B1-1 mit dem Inspektionsobjekt O1 und das Ergebnisbild B1-2 mit dem Inspektionsobjekt 02 erzeugt.

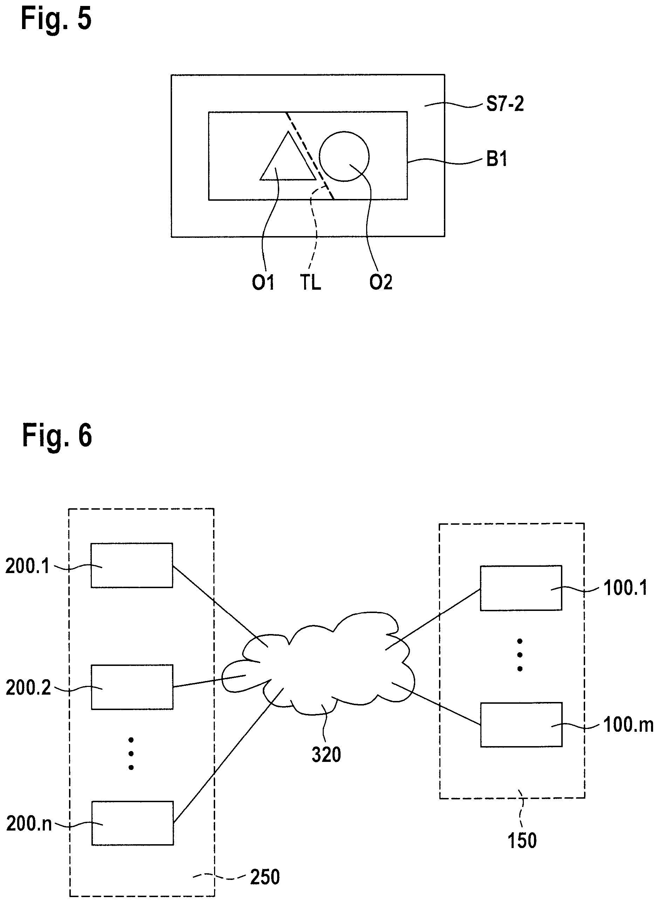

Figur 5 veranschaulicht eine Weiterbildung des Verfahrens 500 der Figur 4. Dabei kann nach Schritt S7-1 der Schritt S7-2 vorgesehen sein, in dem interaktiv mit der Bedienperson der Auswerteeinheit 100, beispielsweise durch Setzen einer Markierung, in dem Durchleuchtungsbild B1 eine Trennkurve, beispielsweise die Trennlinie TL, erzeugt wird, entlang der das Durchleuchtungsbild B1 aufgeteilt werden kann, um die Ergebnisdurchleuchtungsbilder B1-1, B1-2 zu erzeugen, die jeweils nur eines der mehreren Inspektionsobjekte 01, 02 enthalten.

Am Ende des Verfahren 500 der Figur 4 und/oder am Ende des Verfahrens 400 der Figur 3 kann sich ein Schritt S9 anschließen, in dem ein Durchleuchtungsbild, dass nicht korrigiert wurde, oder das kombinierten Durchleuchtungsbild B23 oder eines der Ergebnisdurchleuchtungsbilder B1-1 oder B1-2 der Bedienperson der Auswertevorrichtung 100 zur visuellen Auswertung angezeigt wird. Alternativ oder zusätzlich kann im Schritt S9 auch ein Speichern des Durchleuchtungsbilds oder des kombinierten Durchleuchtungsbilds B23 oder der Ergebnisdurchleuchtungsbilder B1-1, B1-2 zur weiteren oder späteren Verwendung erfolgen.

Es sei noch angemerkt, dass jeweils im Schritt S2 des Verfahrens 400 und/oder im Schritt S7-1 des Verfahrens 500 das Erkennen eines korrigierbaren Bildfehlers automatisch erfolgen kann, z. B. durch geeignete in der Computereinheit 110 implementierte Bildanalyseverfahren. Beispielsweise kann automatisch geprüft werden, ob ein Inspektionsobjekt von einer führenden oder nachlaufenden Bildkante geschnitten wird. Dies spricht dafür, dass das Inspektionsobjekt auf wenigstens zwei Durchleuchtungsbilder verteilt ist. Andererseits kann beispielsweise durch eine Analyse des Bildhintergrundes automatisch erkannt werden, ob es mehrere unabhängige Inspektionsobjekte in ein und demselben Durchleuchtungsbild gibt.

Alternativ oder zusätzlich kann jeweils im Schritt S2 und/oder S7-1 eine Abfrage einer Eingabe durch die Bedienperson erfolgen, wobei die Eingabe der Bedienperson dann der Auswertevorrichtung 100 anzeigt, dass das Durchleuchtungsbild B1 mehrere Inspektionsobjekte O1, 02 und/oder die Durchleuchtungsbilder B2, B3 jeweils ein unvollständig erfasstes Inspektionsobjekt 03 enthalten.

Die im Zusammenhang mit den Figuren 3 bis 5 erläuterten Korrekturverfahren können als ein Computerprogrammprodukt mit einem Computerprogramm implementiert werden. Dazu weist das Computerprogramm Softwaremittel zur Durchführung eines der hier beschriebenen Korrekturverfahren auf, wenn das Computerprogramm auf einem Computer, beispielsweise der Computereinheit 110 der Auswertevorrichtung 100 (Figur 1) ausgeführt wird. Das Computerprogramm kann in bekannter Weise magnetisch, optisch, magnetooptisch oder in jeder anderen geeigneten Art auf einem Datenträger gespeichert sein. Alternativ kann das Computerprogramm in der Form eines Datenstroms vorliegen, wobei der Datenstrom elektronisch lesbare Steuersignale enthält, die mit einem programmierbaren Computer derart interagieren können, dass der Computer eines der hier beschrieben Korrekturverfahren durchführt.

Figur 6 zeigt ein Inspektionssystem 300 mit mehreren (n) Inspektionsanlagen 200.1, 200.2, ..., 200.n (vgl. Figur 1) an einer Kontrollstelle 250 und mehreren (m) Auswertevorrichtungen 100.1, ..., 100.m (vgl. Figur 1) an einer räumlich getrennt angeordneten Auswertestelle 150. Die Inspektionsanlagen 200.1, 200.2, ..., 200.n der Kontrollstelle 250 sind über ein Datennetzwerk 320 mit den Auswertevorrichtungen 100.1, ..., 100.m der Auswertestelle 150 zum elektronischen Datenaustausch in an sich bekannter Weise vernetzt. Selbstverständlich können auch mehrere Kontrollstellen 250 mit der einen oder ebenfalls mehreren Auswertestellen 150 vernetzt sein.

Bei der Kontrollstelle 250 kann es sich beispielsweise um einen Checkpoint am Zugang zu einem Sicherheitsbereich eines Flughafens handeln. Am Checkpoint wird in an sich bekannter Weise das Handgepäck von Flugpassagieren mittels der Inspektionsanlagen 200.1, 200.2, ..., 200.n der Kontrollstelle 250 überprüft. Ein dabei von einer der Inspektionsanlagen 200.1, 200.2, ..., 200.n erzeugtes Durchleuchtungsbild ist im Ausführungsbeispiel ein Röntgenbild von einem der Gepäckstücke eines der Passagiere. Zur Auswertung z. B. in Bezug auf mögliche Sicherheitsrisiken oder andere Gegenstände von Interesse wird das Durchleuchtungsbild über das Netzwerk 320 an eine der Auswertevorrichtungen 100.1, ..., 100.m übermittelt. Dort überprüft eine Bedienperson visuell das Durchleuchtungsbild.

Wenn bei der Erzeugung der Durchleuchtungsbilder einer der hier besprochenen Bildfehler auftreten sollte, kann dieser Fehler mittels dem entsprechenden Korrekturverfahren 400 (Figur 3) und/oder 500 (Figur 4) korrigiert werden. Damit werden zusätzliche Verzögerungen an der Kontrollstelle 250 vermieden und so der gesamte Kontrollablauf verbessert.

## Patentansprüche

1. Verfahren zur Korrektur von Bildfehlern in einem Durchleuchtungsbild (B1, B2, B3) eines Inspektionsobjekts (O1, O2, O3), welches mittels einer Inspektionsanlage (200), die für einen kontinuierlichen Transport von Inspektionsobjekten (O1, O2, O3) in einer Transportrichtung durch die Inspektionsanlage (200) zur Durchführung eines bildgebenden Inspektionsverfahren zur zerstörungsfreien Inspektion der Inspektionsobjekte (O1, O2, O3) und zur Erzeugung von Durchleuchtungsbildern (B1, B2, B3) der Inspektionsobjekte (O1, O2, O3) eingerichtet ist, erzeugt wurde, wobei ein Bildfehler bedeutet, dass bei einem erzeugten Durchleuchtungsbild (B2, B3) eine in der Transportrichtung führende oder nachlaufende Bildkante des Durchleuchtungsbilds (B2, B3) das abgebildete Inspektionsobjekt (O3) schneidet, sodass das Inspektionsobjekt (O1, O2, O3) nicht vollständig in dem Durchleuchtungsbild (B1, B2, B3) enthalten ist, beispielsweise weil sich ein erster Teil des Inspektionsobjekts (O3-1) in einem ersten Durchleuchtungsbild (B2) und ein zweiter Teil (O3-2) in einem zweiten Durchleuchtungsbild (B3) befinden, und
wobei das Verfahren von einer Computereinheit (110) durchgeführt wird und aufweist:
a) Empfangen (S1) eines Durchleuchtungsbilds (B1, B2, B3);
b) Erkennen (S2), ob das Durchleuchtungsbild (B3) nur einen Teil (O3-2) eines Inspektionsobjekts (O3) enthält mittels Prüfen, ob das Inspektionsobjekt (O3) von einer führenden oder einer nachlaufenden Bildkante geschnitten wird;
c) Falls das Durchleuchtungsbild (B3) nur einen Teil (O3-2) eines Inspektionsobjekts (O3) enthält, Abrufen (S3) eines weiteren Durchleuchtungsbilds (B2), das mit der Inspektionsanlage (200) erzeugt wurde und das einen weiteren Teil (O3-1) des Inspektionsobjekts (O3) enthält, wobei basierend darauf, ob in der Transportrichtung die führende respektive die nachlaufende Bildkante des Durchleuchtungsbilds (B3) das Inspektionsobjekt (O3) schneidet, ein vorhergehendes Durchleuchtungsbild respektive ein nachfolgendes Durchleuchtungsbild (B2) abgerufen wird; und
d) Kombinieren (S4) des Durchleuchtungsbilds (B3) mit dem weiteren Durchleuchtungsbild (B2) zu einem kombinierten Durchleuchtungsbild (B23).

2. Verfahren gemäß Anspruch 1, wobei das Verfahren nach Schritt d) weiter aufweist: Zurückkehren (S6) zu Schritt a), falls (S5) im Schritt d) das Durchleuchtungsbild (B3) mit einem weiteren Durchleuchtungsbild (B2) kombiniert wurde.

3. Verfahren gemäß einem der Ansprüche 1 oder 2, wobei das Verfahren weiter aufweist:
e) Erkennen (S7-1), ob das Durchleuchtungsbild (B1) oder das ggf. kombinierte Durchleuchtungsbild mehrere Inspektionsobjekte (O1, 02) enthält;
f) Falls das Durchleuchtungsbild (B1) oder das ggf. kombinierte Durchleuchtungsbild mehrere Inspektionsobjekte (O1, O2) enthält, Aufteilen (S8) des Durchleuchtungsbilds (B1) oder des ggf. kombinierten Durchleuchtungsbilds und Erzeugen von Ergebnisdurchleuchtungsbildern (B1-1, B1-2), die jeweils nur eines der mehreren Inspektionsobjekte (O1, O2) enthalten.

4. Verfahren gemäß Anspruch 3, wobei der Schritt e) aufweist: automatisches Erkennen, ob das Durchleuchtungsbild (B1) mehrere Inspektionsobjekte (O1, O2) enthält; und/oder Abfragen einer Eingabe durch eine Bedienperson, wobei die Eingabe anzeigt, ob das Durchleuchtungsbild (B1) mehrere Inspektionsobjekte (O1, O2) enthält.

5. Verfahren gemäß einem der Ansprüche 1 bis 4, wobei das Verfahren weiter aufweist:
g) Anzeigen (S9) des Durchleuchtungsbilds oder des ggf. kombinierten Durchleuchtungsbilds (B23) oder ggf. der Ergebnisdurchleuchtungsbilder (B1-1, B1-2) für eine Bedienperson zur visuellen Auswertung und/oder Speichern des Durchleuchtungsbilds oder des ggf. kombinierten Durchleuchtungsbilds (B23) oder ggf. der Ergebnisdurchleuchtungsbilder (B1-1, B1-2).

6. Verfahren gemäß einem der Ansprüche 1 bis 5, wobei der Schritt b) aufweist:
automatisches Erkennen, ob ein Durchleuchtungsbild (B2, B3) ein unvollständig erfasstes Inspektionsobjekt (O3) enthält; und/oder Abfragen einer Eingabe durch eine Bedienperson,
wobei die Eingabe anzeigt, ob ein Durchleuchtungsbild (B2, B3) ein unvollständig erfasstes Inspektionsobjekt (O3) enthält.

7. Verfahren gemäß einem der Ansprüche 1, 2, 4, 5, und 6, wobei das Verfahren weiter aufweist:
e) Erkennen (S7-1), ob das Durchleuchtungsbild (B1) oder das ggf. kombinierte Durchleuchtungsbild mehrere Inspektionsobjekte (O1, O2) enthält;
f) Falls das Durchleuchtungsbild (B1) oder das ggf. kombinierte Durchleuchtungsbild mehrere Inspektionsobjekte (O1, O2) enthält: Definieren (S7-2), insbesondere durch Setzen einer Markierung, in dem Durchleuchtungsbild (B1) oder dem ggf. kombinierten Durchleuchtungsbild einer Trennkurve, insbesondere Trennlinie (TL), entlang der das Durchleuchtungsbild (B1) oder das ggf. kombinierte Durchleuchtungsbild in Ergebnisdurchleuchtungsbilder (B1-1, B1-2), die jeweils nur eines der mehreren Inspektionsobjekte (O1, O2) enthalten, aufzuteilen ist; und
Aufteilen (S8) des Durchleuchtungsbilds (B1) oder des ggf. kombinierten Durchleuchtungsbilds und Erzeugen von Ergebnisdurchleuchtungsbildern (B1-1, B1-2), die jeweils nur eines der mehreren Inspektionsobjekte (O1, 02) enthalten.

8. Auswertevorrichtung (100) zur visuellen Auswertung von Durchleuchtungsbildern (B1, B2, B3, B23), wobei die Auswertevorrichtung (100) eine Computereinheit (110), eine Eingabeeinheit (120) und eine Ausgabeeinheit (130) aufweist,
wobei die Ausgabeeinheit (130) eingerichtet ist, einer Bedienperson Durchleuchtungsbilder (B1, B2, B3, B23) von Inspektionsobjekten (O1, O2, O3, O3-1, O3-2) anzuzeigen;
wobei die Eingabeeinheit (120) eingerichtet ist, Eingaben der Bedienperson in Reaktion auf ein angezeigtes Durchleuchtungsbild (B1, B2, B3) zu empfangen; und
wobei die Computereinheit (110) zur Durchführung eines Verfahrens gemäß einem der Ansprüche 1 bis 7 eingerichtet ist.

9. Auswertevorrichtung (100) gemäß Anspruch 8,
wobei die Computereinheit (110) eine Kommunikationsschnittstelle (112) aufweist, mittels welcher die Computereinheit (110) mit einer oder mehreren Inspektionsanlage (200) zur zerstörungsfreien Inspektion von Inspektionsobjekten (O1, O2, O3) für eine Datenkommunikation vernetzbar ist, um von der einen oder den mehreren Inspektionsanlagen (200) Durchleuchtungsbilder (B1, B2, B3) zur visuellen Auswertung vermittels der Datenkommunikation zu empfangen.

10. Inspektionsanlage (200), die für einen kontinuierlichen Transport von Inspektionsobjekten (O1, O2, O3) durch die Inspektionsanlage (200), zur Durchführung eines bildgebenden Inspektionsverfahren zur zerstörungsfreien Inspektion der Inspektionsobjekte (O1, O2, O3) und zur Bereitstellung von Durchleuchtungsbildern (B1, B2, B3) der Inspektionsobjekte (O1, O2, O3) eingerichtet ist sowie mit einer Auswertevorrichtung (100) gemäß Anspruch 8 oder 9 für eine Datenkommunikation verbunden ist.

11. Inspektionssystem (200) mit wenigstens einer Auswertevorrichtung (100; 100.1, ..., 100.m) gemäß Anspruch 8 oder 9, die räumlich getrennt mit einer oder mehreren Inspektionsanlagen (200; 200.1, 200.2, ..., 200.n), die für einen kontinuierlichen Transport von Inspektionsobjekten (O1, O2, O3) durch die Inspektionsanlage (200), zur Durchführung eines bildgebenden Inspektionsverfahren zur zerstörungsfreien Inspektion der Inspektionsobjekte (O1, O2, O3) und zur Bereitstellung von Durchleuchtungsbildern (B1, B2, B3) der Inspektionsobjekte (O1, O2, O3) eingerichtet ist, für eine Datenkommunikation verbunden ist, wobei Durchleuchtungsbildern (B1, B2, B3) von an der einen oder den mehreren Inspektionsanlagen (200; 200.1, 200.2, ..., 200.n) inspizierten Inspektionsobjekten (O1, O2, O3) für eine visuelle Auswertung an die Auswertevorrichtung (100; 100.1, ..., 100.m) übertragen werden.

12. Computerprogrammprodukt mit einem Computerprogramm, das Softwaremittel zur Durchführung eines Verfahrens nach einem der Ansprüche 1 bis 7 aufweist, wenn das Computerprogramm auf einem Computer ausgeführt wird.

13. Datenträger mit einem Computerprogrammprodukt gemäß Anspruch 12.

14. Datenstrom mit elektronisch lesbaren Steuersignalen, die mit einem programmierbaren Computer derart interagieren können, dass der Computer ein Verfahren nach einem der Ansprüche 1 bis 7 durchführt.

## Claims

1. Method for correcting image errors in a transmission image (B1, B2, B3) of an inspection object (O1, O2, O3), which is generated by means of an inspection apparatus (200) configured for continuous transport of inspection objects (O1, O2, O3) in a transport direction through the inspection apparatus (200) for performing an image inspection method for non-destructive inspection of the inspection objects (O1, O2, O3) and for generating transmission images (B1, B2, B3) of the inspection objects (O1, O2, O3), wherein an image error means that, in a generated transmission image (B2, B3), an image edge of the transmission image (B2, B3) leading or trailing in the transport direction intersects the imaged inspection object (O3), so that the inspection object (O1, O2, O3) is not completely contained in the transmission image (B1, B2, B3), for example because a first part of the inspection object (03-1) is in a first transmission image (B2) and a second part (O3-2) is in a second transmission image (B3), and
wherein the method is performed by a computer unit (110) and comprises:
a) receiving (S1) a transmission image (B1, B2, B3);
b) detecting (S2) whether the transmission image (B3) contains only a part (O3-2) of an inspection object (O3) by checking whether the inspection object (O3) is intersected by a leading or a trailing image edge;
c) if the transmission image (B3) contains only a part (O3-2) of an inspection object (O3), retrieving (S3) another transmission image (B2) generated with the inspection apparatus (200) and containing another part (03-1) of the inspection object (O3), wherein based on whether in the transport direction the leading or trailing image edge of the transmission image (B3) intersects the inspection object (O3), a previous transmission image or a subsequent transmission image (B2), respectively, is retrieved; and
d) combining (S4) the transmission image (B3) with the further transmission image (B2) into a combined transmission image (B23).

2. The method according to claim 1, wherein the method after step d) further comprises:
returning (S6) to step a) if (S5) in step d) the transmission image (B3) has been combined with a further transmission image (B2).

3. The method according to any one of claims 1 or 2, the method further comprising:
e) detecting (S7-1) whether the transmission image (B1) or the possibly combined transmission image contains a plurality of inspection objects (O1, O2);
f) if the transmission image (B1) or the possibly combined transmission image contains several inspection objects (O1, O2), splitting (S8) the transmission image (B1) or the possibly combined transmission image and generating result transmission images (B1-1, B1-2) each containing only one of the several inspection objects (O1, O2).

4. The method according to claim 3, wherein step e) comprises: automatically detecting whether the transmission image (B1) includes a plurality of inspection objects (O1, O2); and/or requesting an input from an operator, the input indicating whether the transmission image (B1) includes a plurality of inspection objects (O1, O2).

5. The method according to any one of claims 1 to 4, the method further comprising:
(g) displaying (S9) the transmission image or the possibly combined transmission image (B23) or possibly the result transmission images (B1-1, B1-2) to an operator for visual evaluation and/or storing the transmission image or the possibly combined transmission image (B23) or possibly the result transmission images (B1-1, B1-2).

6. The method according to any one of claims 1 to 5, wherein step b) comprises:
automatically detecting whether a transmission image (B2, B3) contains an incompletely detected inspection object (O3); and/or requesting an input from an operator, the input indicating whether a transmission image (B2, B3) contains an incompletely detected inspection object (O3).

7. The method according to any one of claims 1, 2, 4, 5, and 6, the method further comprising:
e) detecting (S7-1) whether the transmission image (B1) or the possibly combined transmission image contains multiple inspection objects (O1, O2);
f) if the transmission image (B1) or the possibly combined transmission image contains multiple inspection objects (O1, O2):
defining (S7-2), in particular by setting a marker, in the transmission image (B1) or the possibly combined transmission image a separation curve, in particular separation line (TL), along which the transmission image (B1) or the possibly combined transmission image is to be divided into result transmission images (B1-1, B1-2) each containing only one of the plurality of inspection objects (O1, O2); and
splitting (S8) the transmission image (B1) or the possibly combined transmission image and generating result transmission images (B1-1, B1-2) each containing only one of the plurality of inspection objects (O1, O2).

8. Evaluation device (100) for visual evaluation of transmission images (B1, B2, B3, B23), wherein the evaluation device (100) comprises a computer unit (110), an input unit (120) and an output unit (130),
wherein the output unit (130) is configured to display transmission images (B1, B2, B3, B23) of inspection objects (O1, O2, O3, 03-1, O3-2) to an operator;
wherein the input unit (120) is arranged to receive operator input in response to a displayed transmission image (B1, B2, B3); and
wherein the computer unit (110) is configured to perform a method according to any one of the claims 1 to 7.

9. The evaluation device (100) according to claim 8,
wherein the computer unit (110) comprises a communication interface (112) by means of which the computer unit (110) is networkable with one or more inspection apparatuses (200) for non-destructive inspection of inspection objects (O1, O2, O3) for data communication in order to receive transmission images (B1, B2, B3) from the one or more inspection apparatuses (200) for visual evaluation by means of the data communication.

10. Inspection apparatus (200) which is configured for a continuous transport of inspection objects (O1, O2, O3) through the inspection apparatus (200), for carrying out an imaging inspection method for non-destructive inspection of the inspection objects (O1, O2, O3) and for providing transmission images (B1, B2, B3) of the inspection objects (O1, O2, O3), and which is connected to an evaluation device (100) according to claim 8 or 9 for data communication.

11. Inspection system (200) with at least one evaluation device (100; 100.1, ..., 100.m) according to claim 8 or 9, which is spatially separated from and connected for data communication with one or more inspection apparatuses (200; 200.1, 200.2, ..., 200. n) which are configured for continuous transport of inspection objects (O1, O2, O3) through the inspection apparatus (200), for performing an imaging inspection process for non-destructive inspection of the inspection objects (O1, O2, O3) and for providing transmission images (B1, B2, B3) of the inspection objects (O1, O2, O3), wherein transmission images (B1, B2, B3) from the inspection apparatuses (200; 200. 1, 200.2, ..., 200.n) are transmitted to the evaluation device (100; 100.1, ..., 100.m) for visual evaluation.

12. Computer program product comprising a computer program having software means for carrying out a method according to any one of claims 1 to 7, when the computer program is executed on a computer.

13. Data carrier comprising a computer program product according to claim 12.

14. Data stream comprising electronically readable control signals capable of interacting with a programmable computer such that the computer performs a method according to any one of claims 1 to 7.

## Revendications

1. Procédé de correction d'erreurs d'image dans une image radioscopique (B1, B2, B3) d'un objet d'inspection (O1, O2, O3) générée au moyen d'une installation d'inspection (200) conçue pour un transport continu d'objets d'inspection (O1, O2, O3) dans une direction de transport à travers l'installation d'inspection (200) pour la réalisation d'un procédé pour fournissant des images destiné à l'inspection sans détérioration des objets d'inspection (O1, O2, O3) et à la génération d'images radioscopiques (B1, B2, B3) des objets d'inspection (O1, O2, O3), cependant qu'une erreur d'image signifie que, à une image radioscopique (B2, B3) générée, un bord d'image, de l'image radioscopique (B2, B3), situé à l'avant ou à l'arrière dans la direction du transport, coupe l'objet d'inspection (O3), de telle sorte que l'objet d'inspection (O1, O2, O3) n'est pas entièrement contenu dans l'image radioscopique (B1, B2, B3), par exemple parce qu'une première partie de l'objet d'inspection (O3-1) se trouve dans une première image radioscopique (B2) et une deuxième partie (O3-2) se trouve dans une deuxième image radioscopique (B3), et
cependant que le procédé est réalisé par une unité d'ordinateur (110) et comporte :
a) réception (S1) d'une image radioscopique (B1, B2, B3) ;
b) reconnaissance (S2) de si l'image radioscopique ne contient qu'une partie (O3-2) d'un objet d'inspection (O3), par vérification de si l'objet d'inspection (O3) est coupé par un bord d'image situé à l'avant ou à l'arrière ;
c) dans le cas où l'image radioscopique (B3) ne contient qu'une partie (O3-2) d'un objet d'inspection (O3), appel (S3) d'une autre image radioscopique (B2) générée avec l'installation d'inspection (200) et contenant une autre partie (03-1) de l'objet d'inspection (O3), cependant, sur la base de si, dans la direction du transport, c'est le bord d'image, de l'image radioscopique (B3), situé à l'avant ou à l'arrière qui coupe l'objet d'inspection (O3), une image radioscopique précédente ou une image radioscopique suivante (B2) est appelée ; et
d) combinaison (S4) de l'image radioscopique (B3) et de l'autre image radioscopique (B2) de manière à obtenir une image radioscopique (B23) combinée.

2. Procédé selon la revendication 1, cependant que le procédé, après l'étape d), comporte en outre :
retour (S6) à l'étape a) si (S5), à l'étape d), l'image radioscopique (B3) a été combinée avec une autre image radioscopique (B2).

3. Procédé selon une des revendications 1 ou 2, cependant que le procédé comporte en outre :
e) reconnaissance (S7-1) de si l'image radioscopique (B1) ou éventuellement l'image radioscopique combinée contient plusieurs objets d'inspection (O1, O2) ;
f) dans le cas où l'image radioscopique (B1) ou éventuellement l'image radioscopique combinée contient plusieurs objets d'inspection (O1, O2), partage (S8) de l'image radioscopique (B1) ou de l'image radioscopique éventuellement combinée, et génération d'images radioscopiques de résultat (B 1-1, B1-2) qui contiennent respectivement seulement un des plusieurs objets d'inspection (O1, O2).

4. Procédé selon la revendication 3, cependant que l'étape e) comporte:
reconnaissance automatique de si l'image radioscopique (B1) contient plusieurs objets d'inspection (O1, O2) ;
et/ou demande d'une entrée par un opérateur, cependant que l'entrée affiche si l'image radioscopique (B1) contient plusieurs objets d'inspection (O1, O2).

5. Procédé selon une des revendications de 1 à 4, cependant que le procédé comporte en outre :
g) affichage (S9) de l'image radioscopique ou de l'image radioscopique (B23) éventuellement combinée ou éventuellement des images radioscopiques de résultat (B1-1, B1-2) pour un opérateur pour l'évaluation visuelle et/ou la mémorisation de l'image radioscopique ou de l'image radioscopique (B23) éventuellement combinée ou éventuellement des images radioscopiques de résultat (B1-1, B1-2).

6. Procédé selon une des revendications de 1 à 5, cependant que l'étape b) comporte :
reconnaissance automatique de si une image radioscopique (B2, B3) contient un objet d'inspection (O3) incomplètement saisi ; et/ou demande d'une entrée par un opérateur, cependant que l'entrée affiche si une image radioscopique (B2, B3) contient un objet d'inspection (O3) incomplètement saisi.

7. Procédé selon une des revendications 1, 2, 4, 5 et 6, cependant que le procédé comporte en outre :
e) reconnaissance (S7-1) de si l'image radioscopique (B1) ou l'image radioscopique éventuellement combinée contient plusieurs objets d'inspection (O1, O2) ;
f) dans le cas où l'image radioscopique (B1) ou l'image radioscopique éventuellement combinée contient plusieurs objets d'inspection (O1, O2) : définition (S7-2), en particulier par mise d'un marquage, dans l'image radioscopique (B1) ou l'image radioscopique éventuellement combinée, d'une courbe de séparation, en particulier ligne de séparation (TL), le long de laquelle l'image radioscopique (B 1) ou l'image radioscopique éventuellement combinée est à partager en des images radioscopiques de résultat (B1-1, B1-2) qui ne contiennent respectivement qu'un des plusieurs objets d'inspection (O1, O2) ; et
partage (S8) de l'image radioscopique (B1) ou de l'image radioscopique éventuellement combinée et génération d'images radioscopiques de résultat (B1-1, B1-2) qui ne contiennent respectivement qu'un des plusieurs objets d'inspection (O1, O2).

8. Dispositif d'évaluation (100) pour l'évaluation visuelle d'images radioscopiques (B 1, B2, B3, B23), cependant que le dispositif d'évaluation (100) comporte une unité d'ordinateur (110), une unité d'entrée (120) et une unité de sortie (130),
cependant que l'unité de sortie (130) est conçue pour afficher à un opérateur des images radioscopiques (B1, B2, B3, B23) d'objets d'inspection (O1, O2, O3, 03-1, O3-2),
cependant que l'unité d'entrée (120) est conçue pour recevoir des entrées de l'opérateur en réaction à une image radioscopique (B1, B2, B3) affichée ; et
cependant que l'unité d'ordinateur (110) est conçue pour la réalisation d'un procédé selon une des revendications de 1 à 7.

9. Dispositif d'évaluation (100) selon la revendication 8,
cependant que l'unité d'ordinateur (110) comporte une interface de communication (112) au moyen de laquelle l'unité d'ordinateur (110) est, pour une communication de données, interconnectable avec une ou plusieurs installations d'inspection (200) pour l'inspection sans détérioration d'objets d'inspection (O1, O2, O3), afin de recevoir de la part de la une ou des plusieurs installations d'inspection (200), par le biais de la communication de données, des images radioscopiques (B1, B2, B3) pour l'évaluation visuelle.

10. Installation d'inspection (200) conçue pour un transport continu d'objets d'inspection (O1, O2, O3) à travers l'installation d'inspection (200), pour la réalisation d'un procédé fournissant des images destiné à l'inspection sans détérioration des objets d'inspection (O1, O2, O3) et à la mise à disposition d'images radioscopiques (B1, B2, B3) des objets d'inspection (O1, O2, O3), ainsi que reliée à un dispositif d'évaluation (100) selon la revendication 8 ou 9 pour une communication de données.

11. Installation d'inspection (200) ayant au moins un dispositif d'évaluation (100; 100.1, ..., 100.m) selon la revendication 8 ou 9 qui, spatialement séparément, est, pour une communication de données, relié avec une ou plusieurs installations d'inspection (200; 200.1, 200.2, ..., 200.n) conçues pour un transport continu d'objets d'inspection (O1, O2, O3) à travers l'installation d'inspection (200), pour la réalisation d'un procédé fournissant des images destiné à l'inspection sans détérioration des objets d'inspection (O1, O2, O3) et à la mise à disposition d'images radioscopiques (B1, B2, B3) des objets d'inspection (O1, O2, O3), cependant que des images radioscopiques (B1, B2, B3) d'objets d'inspection (O1, O2, O3) inspectés à la une ou aux plusieurs installations d'inspection (200; 200.1, 200.2, ..., 200.n) sont transmises au dispositif d'évaluation (100; 100.1, ..., 100.m) pour une évaluation visuelle.

12. Produit programme d'ordinateur ayant un programme d'ordinateur qui comporte des moyens logiciels pour la réalisation d'un procédé selon une des revendications de 1 à 7 quand le programme d'ordinateur est exécuté sur un ordinateur.

13. Support de données ayant un produit programme d'ordinateur selon la revendication 12.

14. Flux de données ayant des signaux de commande lisibles électroniquement, lesquels peuvent interagir de telle façon avec un ordinateur programmable que l'ordinateur réalise un procédé selon une des revendications de 1 à 7.
